# EUROPEAN PATENT SPECIFICATION

(11) **EP 0 736 282 B1**
(45) Date of publication and mention of the grant of the patent: **07.06.2000**
(21) Application number: 96104703.2
(22) Date of filing: 25.03.1996
(51) Int. Cl.: A47J 27/09, A47J 27/092

(54) **Device controlling the working valve of a pressure cooker**
Einrichtung zur Kontrolle eines Ventils von einem Druckkochtopf
Dispositif de contrôle d'une soupape d'un appareil de cuisson sous pression

(30) Priority: 06.04.1995 IT MI950700
(43) Date of publication of application: 09.10.1996
(73) Proprietor: LAGOSTINA S.p.A., 28026 Omegna, Verbania (IT)
(72) Inventor: Moroni, Vitaliano, 28025 Gravellona Toce, Verbania (IT)
(74) Representative: Petruzzelli, Antonio European Patent Attorney

(56) References cited:
- EP-A- 0 424 305
- EP-A- 0 491 324
- WO-A-92/03080
- WO-A-94/16605
- DE-A- 4 022 004
- GB-A- 2 182 583

## Description

The present invention relates to a pressure cooker comprising a device for controlling the working valve.

Traditional pressure cookers generally comprise a container, whereon a closure lid is mounted, with the edge of the latter and the edge of the container which both have respective jutting projections, suitable for engaging reciprocally one with the other and for locking the lid on the container, following relative rotation between the lid and the container, and each comprising at least one respective handle, these two handles being mobile between an opening position of the lid, wherein they are angularly distanced, and a closure position wherein they are on top of each other. The lid of the cooker has an aperture at which a working valve is attached for releasing the steam produced by cooking, when the internal pressure has reached a predetermined level. Said working valve has a shutter for closing said aperture.

In traditional cookers the working valve, generally of the gravity type, is usually arranged in a substantially central position of the lid, so that, when cooking has ended and the cooker has to be opened by manually acting on said valve to release the pressure inside the cooker, the user of the cooker risks burning his or her hand with the pressurised steam which is released from the cooker or by accidentally touching the boiling lid.

Gravity valves for pressure cookers are likewise known which are suitable for allowing cooking at two different levels of pressure. In some known valves the gravity element of the valve is simply replaced by another element of different weight according to cooking needs. Other types of valve have a lever for controlling the pressure setting which is located directly on the working valve arranged virtually in the centre of the lid. Here too, therefore, when the user goes to actuate the valve to change the cooking pressure, he or she runs the risk of being burnt due to inopportune contact with the hot lid or due to reverberations of heat from the flames of the gas ring at the side of the cooker.

Some types of pressure cookers currently in use have the handle of the lid which engages with the handle of the container, via a suitable rotation locking and engaging part, so as to lock, following a rotation, the lid on the container. They also have a passage in the lid through which a safety pin, for locking opening of the cooker, slides, which pin, when it rises through the effect of the pressure in the cooker, engages directly with the handle of the lid, preventing its relative rotation in relation to the handle of the cooker container, thus preventing opening of the cooker if the pressure inside the latter is still above a predetermined safety level.

In this way, hopefully, the lid cannot be opened if there is a minimum hazardous internal pressure. If this were to occur, the unexpected release of boiling steam contained in the cooker could burn an insufficiently cautious user.

More particularly, some pressure cookers of a known type have, on the handle attached to the lid, a pushbutton which controls the mechanism for engaging and locking of the relative rotation of the handles. Said control pushbutton, in order to allow disengaging of the handles and opening of the pressure cooker, moves in a radial direction and is pushed by a preloaded spring into a backward position of locking the opening. In order to open the cooker the pushbutton has to be pressed hard with a finger, so as to push it towards the centre of the lid, while the rest of the hand is used to grasp the upper handle. At the same time the other hand is used to grasp the underlying handle and attempts are made to rotate the two handles one in relation to the other. During the whole opening operation, due to the preloaded spring acting on the opening control pushbutton, the pressure of the finger has to be maintained permanently on this pushbutton. The pressure exerted on the pushbutton must above all be of a certain extent given the considerable elastic reaction of this thrust spring. The opening manoeuvre in these traditional cookers is therefore particularly difficult and especially if the user of the cooker is an elderly person in poor physical conditions.

In traditional pressure cookers, the abovementioned mechanism for safe opening of the cooker is completely separate from the working valve of the cooker.

A further pressure cooker is described in EP-A-424 305.

The object of the present invention is that of providing a device for controlling a working valve of a pressure cooker such as to avoid the disadvantages shown by similar devices hitherto known, in particular of providing a mechanism for controlling the working valve whereby any risk of burning for the user of the cooker is avoided.

Another object of the present invention is that of providing in a pressure cooker a centralised mechanism for controlling opening of the cooker and of the working valve. Yet another object is that of providing a centralised system for controlling opening of the working valve such that no opening of the cooker is possible if the cooker contains pressurised, overheated steam.

The first object is achieved by providing a device for controlling the working valve of a pressure cooker which, according to the disclosure in the characterising part of claim 1, comprises, at said handle of the lid, a control pushbutton which is angularly mobile and which can be selectively positioned in predetermined angular positions of actuation, and, below the shutter of the valve, a cylindrical body, having a longitudinal axis, attached to said lid in order to rotate around said longitudinal axis and integral with said pushbutton to rotate with the latter, and a raising slider for said shutter of the valve, also cylindrical, coaxial and facing said cylindrical body, said raising slider being integral with said lid so as to be mobile axially in the direction of said longitudinal axis and cam means provided between said slider and said cylindrical body for driving the axial movement of said slider for raising the shutter following a rotation of said control pushbutton.

In this way it is possible, by acting on the pushbutton arranged at the handle in heat-insulating material, to actuate the working valve without any risk of burning.

Moreover, without the elastic means acting on the control pushbutton, it is not necessary to maintain a pushing action permanently thereon. The pushbutton is made to rotate and is positioned in the required angular position of working of the system and all the fingers of the hands can be used to act on the handles to open the cooker.

With the present invention definitely simple opening of the cooker without requiring excessive effort is provided.

Basing on a system for controlling the valve constructed in this way, it is possible, according to a further innovative feature, to provide centralised control suitable for controlling both the working valve and the part for locking the handles. This is achieved according to the present invention, providing, according to the disclosure of the characterising part of claim 2, a block integral with said actuation body for controlling, following a rotation of the control pushbutton, said part for engaging and locking the handles together, such as to engage and disengage respectively the handles one in respect of the other.

Moreover, according to a further innovative feature of the present invention, with this centralised control opening of the cooker can be prevented when there is still pressurised steam inside. This is obtained, according to the disclosure of the characterising part of claim 3, by providing a finger which extends radially from said cylindrical body, which finger interferes during the movement of rotation of said cylindrical body with the axial sliding path of said safety pin, in such a way that when the pressure inside the cooker is still high, the engaging of the finger with the safety pin in a raised position prevents further rotation of the cylindrical body and actuation by the control block of the respective part for locking the handles together.

The present invention will in any case be made clearer on reading the following description, relating to a preferred embodiment of the invention, to be read with reference to the accompanying drawings, in which:
Figure 1 is a partial view in longitudinal section of the pressure cooker whereon the system of the present invention is mounted;
Figure 2 is a view from above of the pressure cooker whereon the system of the present invention is mounted;
Figures 3 to 5 are sectioned views showing the working valve and the actuation device according to the preferred embodiment of the present invention, in three different working positions;
Figures 6 and 7 are sectioned views taken along line 6-6 of Figure 1, showing in particular the part for engaging the handles of the cooker in two different working positions, i.e. in a position of locking together of the handles and in a position of disengaging of the handles respectively;
Figure 8 is a view from above of the handle of the lid which indicates the different working positions of the device assumed by the device of the present invention;
Figure 9 is a side view of the block comprising the cylindrical actuation body, the control pushbutton, the block for actuation of the part for engaging and locking the handles together and the finger for engaging the safety pin;
Figure 10 is a view from above of the block of Figure 9;
Figure 11 is a sectioned view taken along line 11-11 of Figure 10 relating to the block in Figures 9 and 10;
Figure 12 is an elevated view, partially sectioned, of the central stem of the working valve;
Figure 13 is a view from above of the stem of Figure 12;
Figure 14 is a projected view of the lateral surface of the slider of the present invention;
Figure 15 is a view from above of the slider of the present invention;
Figure 16 is a sectioned view, taken along the line 16-16 of Figure 15, of the slider of the present invention;
Figure 17 is a view from above of the actuation block alone, showing said positioning part of the present invention; Figure 18 is a sectioned view of the second extra weight of the valve of the device of the present invention;
Figure 19 is a sectioned view of the first extra weight integral with the shutter of the valve of the present invention;
Figure 20 is a sectioned view taken along line 20-20 of Figure 21 of the protective casing of the valve of the present invention;
Figure 21 is a view from below again of the protective casing of the valve of the present invention;
Figure 22 is a view from above of the upper handle attached to the lid of the cooker;
Figure 23 is a side view of the part for engaging and locking together the handles of the cooker;
Figure 24 is a view from above of the lower handle attached to the container of the pressure cooker.

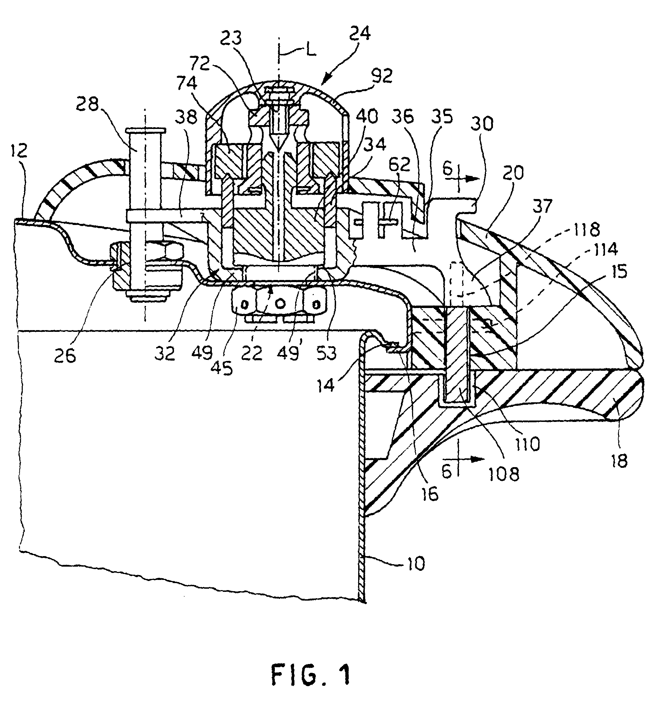

As shown in Figure 1, the pressure cooker comprises in a traditional manner a container 10 whereon a lid 12 for closing the container 10 is mounted, whose respective edges both have respective jutting projections 14, 16 suitable for mutually engaging one with the other and for locking the lid 12 on the container 10 following a relative rotation between the lid 12 and the container 10.

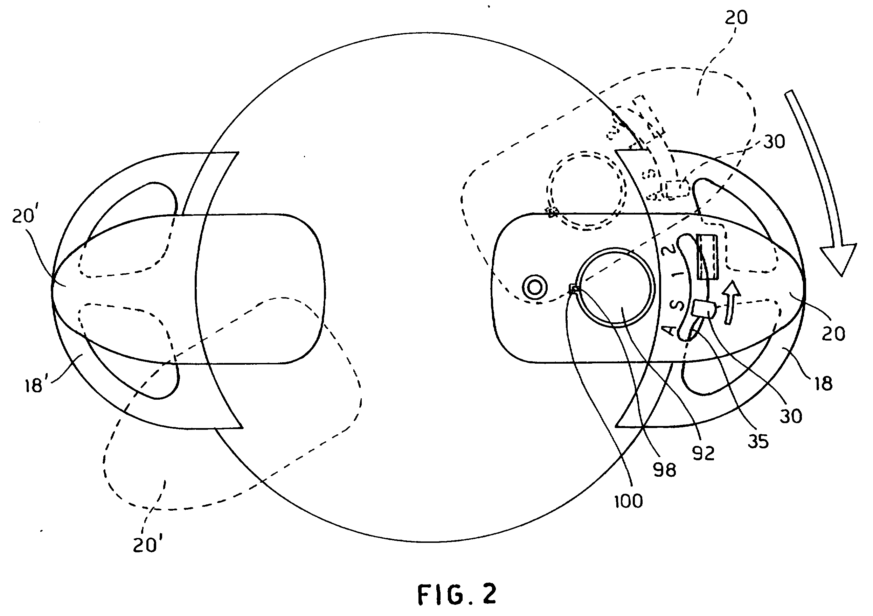

With reference also to Figure 2, it can be seen that said container 10 and said lid 12 each have respective handles 18, 18' and 20, 20', of which handles 18 and 20 are intended to engage one with the other, by means of a suitable part for engaging and locking rotation 15, and to lock, following a rotation, the lid 12 onto the container 10.

These handles 20, 20' of the lid are mobile with the latter between a position of opening of the cooker, shown by a dotted line in Figure 2, wherein they are angularly distanced in relation to the handles 18, 18' of the cooker, and a position of closure shown by an unbroken line in said Figure 2, wherein they are arranged above said handles 18, 18' of the cooker.

The lid of the cooker 12 also comprises an aperture 22 at which a working valve 24 is attached for releasing the steam produced by cooking, having a shutter 23 for closing said aperture 22, and a passage 26 wherein a safety pin 28 slides to lock opening of the cooker, suitable for preventing opening of the lid 12 when the internal pressure is still above a predetermined safety pressure.

According to the present invention, the device for actuating the valve of the pressure cooker comprises a control lever 30 angularly mobile and selectively positionable in predetermined angular positions of actuation, a cylindrical body 32 with a longitudinal axis L, attached rotatably to said lid 12 so as to rotate around said longitudinal axis and integral with said lever 30 to rotate with the latter, a slider 34 for raising said shutter 23 of the valve 24, also cylindrical, concentric and inside said cylindrical body 32. Said raising slider 34 is integral with said lid 12 so as to be mobile in the sole direction of said longitudinal axis L. According to the invention, suitable cam means are provided between said slider 34 and said cylindrical body 32, for driving the axial movement of said slider 34 following a rotation of said cylindrical body 32.

As shown, said control lever 30 projects from the handle 20 of the lid 12 through an arched slit of the latter denoted by reference numeral 35 at which suitable reference indications marked by the letters "A" and "S" and by the numbers "1" and "2" are provided on the handle 20 to distinguish different ways of operating of the system and whose meaning will be further explained hereinbelow.

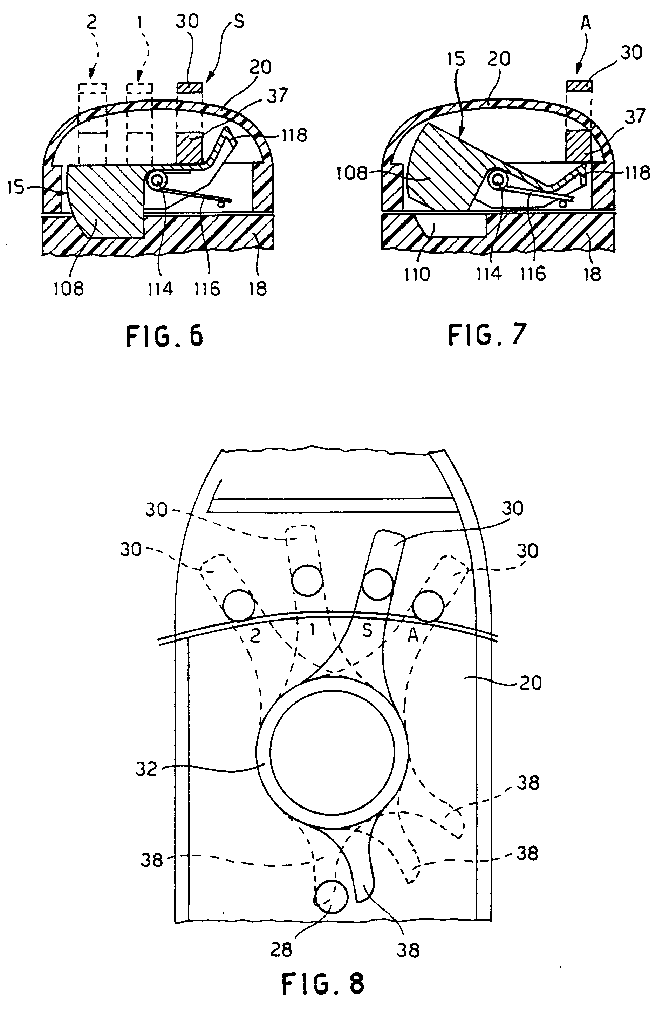

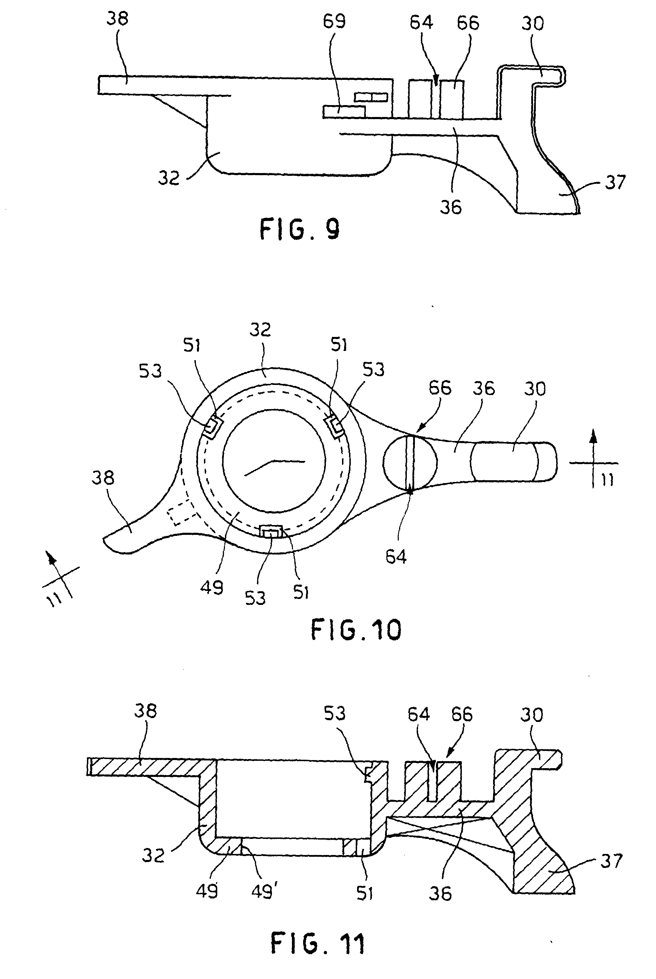

As shown also with reference to Figures 9 to 11, said actuation body 32 is in the form of a hollow cylinder which has a radial arm 36 wherefrom said control lever 30 with a general "L" shape projects above and a block 37 for actuating said part for engaging and locking 15 together the handles 18, 20 projects below. On the opposite side to that wherefrom said radial arm 36 projects, a finger 38 projects radially and is angularly displaced in relation to the radial path described by said arm 36. Said finger 38, as shown in Figures 1 and 8, interferes during the movement of rotation of said cylindrical body 32 with the axial sliding path of said safety pin 28.

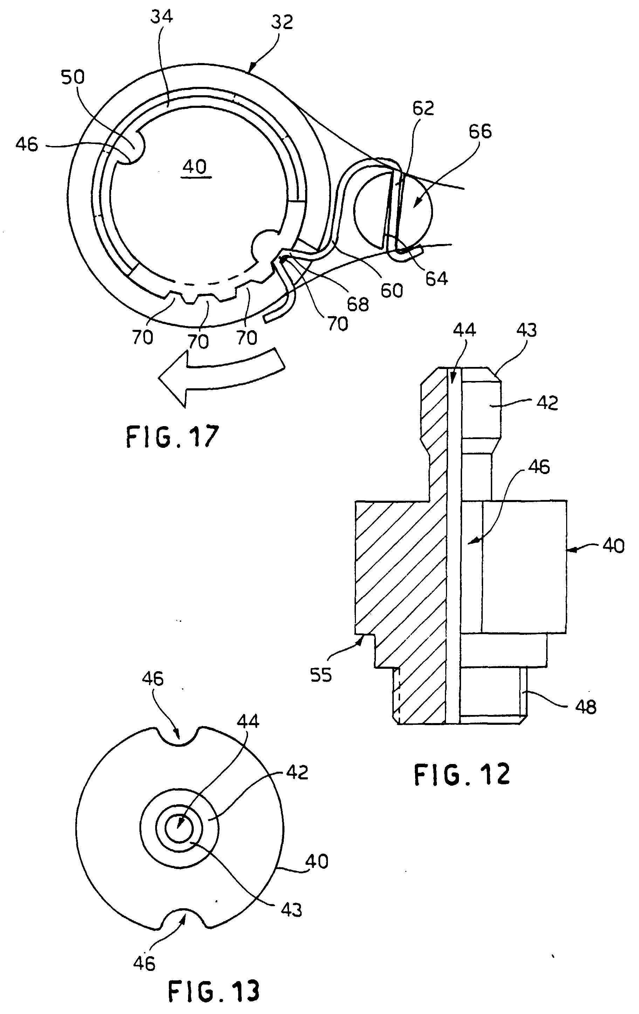

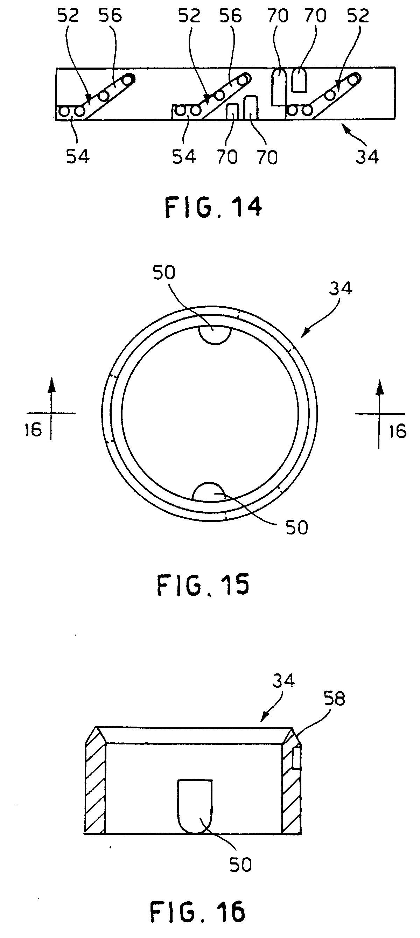

With reference also to Figures 12 and 13, at said coaxial passage aperture 22 inside said cylindrical actuation body 32 and said slider 34 a cylindrical stem 40 is provided, wherefrom a vent 42 extends above and wherein a central longitudinal hole 44 is formed, open at both ends. Said stem 40 is, in a traditional manner, firmly attached to said lid 12 by means of a perforated nut 45 which is screwed to the lower threaded portion 48 of said stem 40 projecting below the lid 12 through said aperture 22. In an innovative manner, as will be made clearer further on, said stem 40 defines a pivoting element for said actuation body 32 and also has on the two opposite sides of its external surface two vertical grooves 46 suitable for guiding the vertical movement of said slider 34.

Figures 10 and 11 also show that said cylindrical actuation body 32 has below an annular flange 49 for supporting said slider 34 and provided with holes 51 for the percolation of the condensate and of the cooking steam residues released from the working valve 24. Said flange 49 is longitudinally restrained by the annular shoulder 55 of the stem 40 whereon it rotates by means of its internal edge 49'.

Said slider 34, which is shown in greater detail in Figures 14 to 16, is in the form of a short, hollow and cylindrical element which has on its internal surface vertical ribs 50 which are suitable for insertion in the grooves 46 of said block 40, so that each rotation of the slider 34 is prevented but its free sliding along the longitudinal axis L is permitted.

As shown in Figure 1, said slider 34 is placed coaxially to the interior of said actuation body 32 and has on its external lateral surface, as shown in Figure 14, three sliding grooves 52 in which three pintles 53 (shown in Figure 10) are inserted which extend radially from the lateral internal surface of said cylindrical body 32. Said grooves 52 and said pintles 53 define said cam means, allowing driving, following a rotation of said actuation body 32, of the axial movement of the slider 34.

As can be seen from examination of said figures, said pintles 53 are angularly distanced one from the other by 120°, while said sliding grooves 52 each have a first short horizontal section 54 situated at the lower edge of said slider 34 wherefrom an oblique section 56 for driving raising of said slider 34 extends.

The cylindrical slider 34 also has an upper tapered edge 58 for engaging and raising said shutter of the valve.

According to the invention, the presence of suitable means for stopping rotation of said lever 30 in the various predetermined angular working positions of the system is also provided.

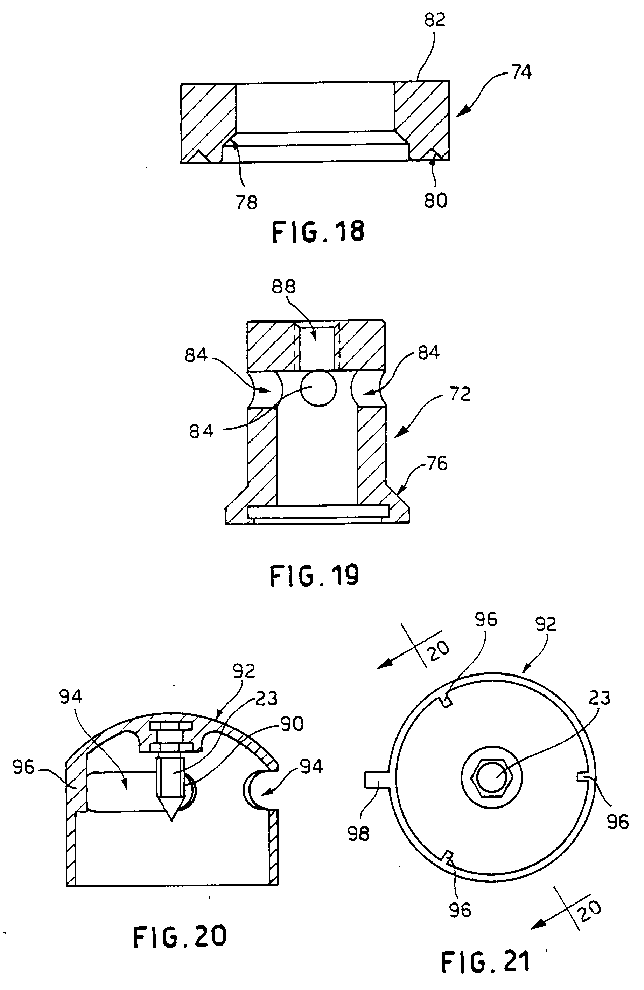

Said means for stopping rotation of said lever 30 comprise, as shown in Figure 17, a flexible element 60 in the form of a shaped metal wire which has an end 62 for insertion in a vertical slot 64 formed in a protuberance 66 which extends upwards from said arm 36 of said actuation body and is arranged between said lever 30 and said cylindrical actuation body 32, as is shown more clearly also in the previously described Figures 9 to 11.

The opposite portion 68 of said flexible element 60 is inserted, passing via a through hole 69 formed on said actuation body 32 in vertical grooves 70 angularly distanced one from the other and formed on the external lateral face of said raising slider 34, shown more clearly in Figure 14.

As shown, said vertical grooves 70, which define sort of positioning notches, have a different height one from the other due to the fact that the slider 34 has in the various angular working positions a different height position.

As shown in Figure 1, integral with the shutter 23 of said working valve 24 is a first cylindrical extra weight 72, shown more clearly in Figure 19, while a second extra weight 74, in the form of an annular element coaxial and external to said first extra weight 72 in respect whereof it is axially sliding and resting on the latter by means of respective and opposite annular and conical engaging bands 76 and 78 respectively, is shown in Figure 18.

As shown in said Figure 18, said second annular extra weight 74 also has an annular housing 80 for engaging the upper edge 58 of said raising slider 34. The reference numeral 82 denotes the edge or upper annular face of said second annular weighting element 74, suitable for engaging portions of the external casing of the valve for raising the latter and the total opening of the valve itself, as will be explained further hereinunder.

Moreover, as shown in Figure 19, said first extra weight 72 has a series of radial holes 84 angularly distanced for the release of the steam, as well as a threaded hole 88 wherein the shutter 23 is screwed and which has correspondingly, as shown in Figure 20, external attachment threading 90.

Said Figure 20, together with Figure 21, in turn shows, in greater detail, the external casing 92 for protecting the valve in the form of a domed element inside whereof said shutter 23 of the valve is attached.

Said external protection casing 92 has horizontal slits 94 for the release of the steam and internally a series of fins or radial projections, more particularly three fins which are angularly distanced one from the other at 120°, denoted by reference numeral 96, whose lower edge can be engaged by the upper annular face or edge 82 of said second annular extra weight 74, when the latter is raised by the slider 34. In this way, by raising said slider 34 to its maximum height, the external extra weight 74 is also raised, which in turn raises the casing 92 and the shutter 23 of the working valve integral therewith, so as to allow complete release of the steam from inside the cooker.

Said casing 92 also has an external fin 98 which extends radially and engages in a suitable housing 100 provided in the handle 20 of the lid, as shown in Figure 2, to prevent any undesirable rotation of said casing 92, and thus prevent one of the slits 94 from positioning turned towards the lever 30 and the release of steam through the latter from causing heating of said pushbutton and the risk of burning of the user.

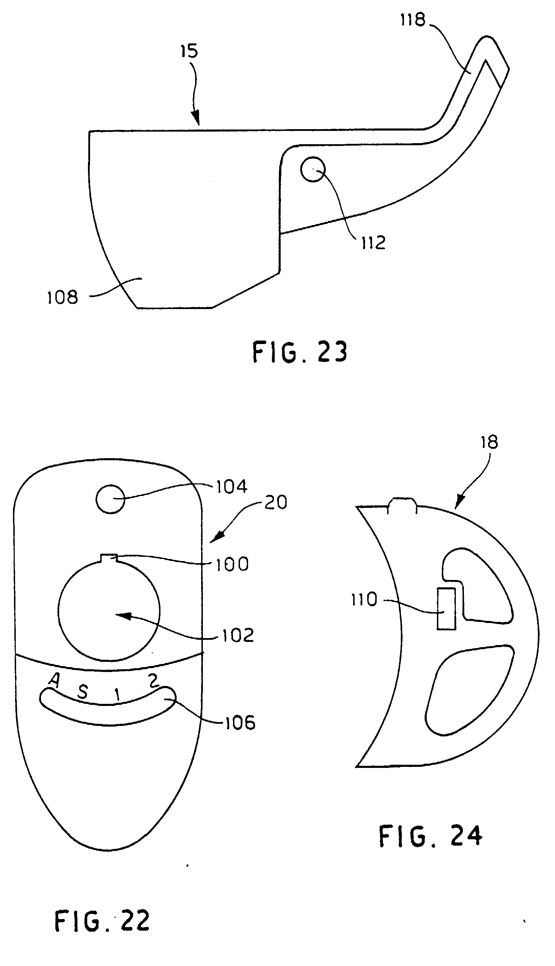

As shown also in Figure 22, said handle 20 attached to the upper lid, has a convex upper surface wherein a substantially circular hole 102 is formed in an approximately central position to house said working valve 24 and having a kind of serration defining said housing 100 for the fin 98 of the casing 92, and at the sides of the latter a smaller circular hole 104 for the passage of said safety pin 28 and an arched slit 106 for the passage of said control lever 30 respectively.

On the external surface of the handle 20 near said arched slit 106 for the passage of said control lever 30 a series of reference indications "A", "S", "1" and "2" are provided, defining the different working positions of the device of the present invention.

Said engaging and locking part 15, as can be understood better by referring also to Figure 23, is in the form of a shaped plate having a tooth 108 which is inserted in a housing 110 of the handle 18 attached to the container of the cooker, shown in Figure 24, achieving locking of the handles of the cooker.

Said engaging and locking part 15 has a hole 112 wherein, as shown in Figures 6 and 7, a pin 114 is inserted and which allows it to be pivoted to said handle 20 attached to the upper lid 12 and is also subjected to the action of a return spring 116 in a preloaded condition to maintain said tooth 108 of the engaging and locking part 15 inserted in the housing 110 of the lower handle 18 and maintain the lid 12 locked on the container 10.

In the figures it is also shown how said engaging and locking part 15 has a trigger 118 whereon, following a rotation of the lever 30 and of the actuation body 32 integral therewith, the block 37 of said actuation body engages to remove said tooth 108 from the housing 110 and allow disengaging between the handles and opening of the cooker.

The operation of the system provides, in short, four working conditions corresponding to four diferent angular working positions for the lever 30 distinguished on the handle 20 of the lid by the aforementioned references A, S, 1 and 2 which mean, respectively, the letter A, a condition of opening of the lid, the letter S, a condition of total release of steam from inside the cooker, the reference numeral 1, a first condition of cooking at a predetermined pressure for example 0.5 bar, and finally the reference numeral 2, a second condition of cooking for foods which require more intensive treatment wherein cooking takes place at a higher predetermined pressure than the previous one, for example 1 bar.

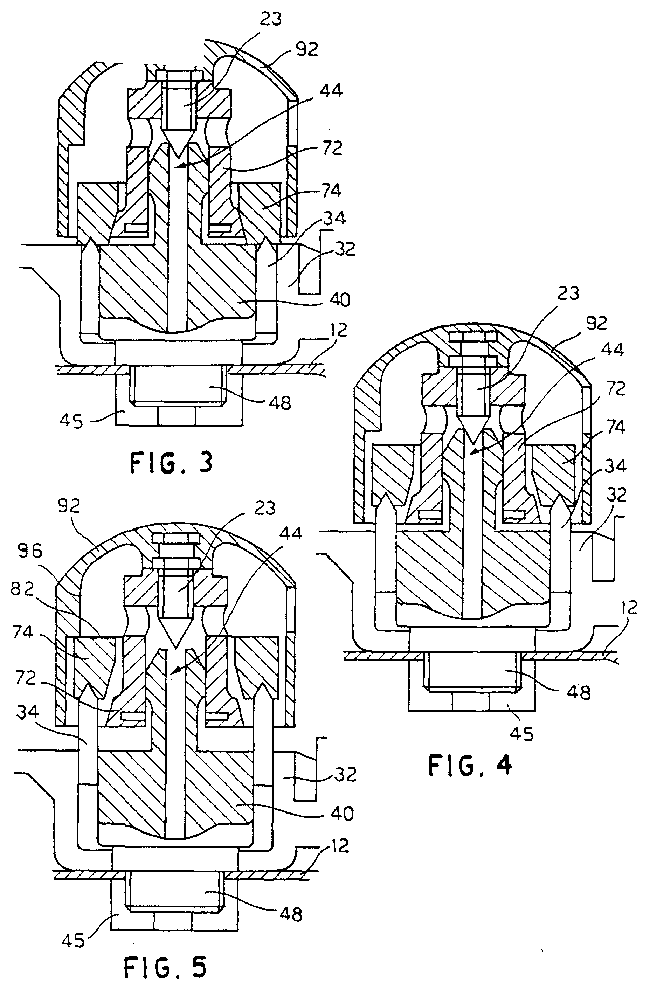

More particularly, when the lever 30 is positioned, as shown by a dotted line in Figure 8, in the first working position at the reference "2" on the handle of the cooker, the various parts of the valve are positioned as shown in Figure 3. This Figure 3 shows how the external mobile extra weight 74 in this working condition rests on the internal extra weight 72 so that the weight of both the extra weights bears on the shutter 23, which thus closes the aperture 44 of the central stem 40. In this condition the slider 34 is completely lowered, while, as shown in Figure 6, the block 37 is in the dotted line position denoted by 2 in Figure 6 and the tooth 108 of the locking part 15 is inserted in the housing 110 of the lower handle 18 and said handles 18,20 are firmly engaged one with the other.

In the second working position, wherein the lever 30 is arranged at the reference "1" on the handle 20 of the cooker, as shown by a dotted line in Figure 8, the parts of the valve are arranged as shown in Figure 4, where the external extra weight 74 is raised from the support on the internal extra weight 72 by means of the slider 34 which rises into an intermediate position on command of said drive means following rotation of the cylindrical actuation body 32 caused by rotation of the lever 30 and cooking takes place at the minimum cooking pressure of 0.5 bar. In this working condition, as shown in Figure 6, the block 37 is in the dotted line position denoted by 1 and the tooth 108 of the locking part 15 remains inserted in the housing 110 of the lower handle 18 with said handles 18,20 maintained firmly engaged one with the other.

In the third working position wherein the lever 30, as shown by the unbroken line in Figure 8, is positioned at the reference "S" on the handle 20 of the lid, the parts of the valve assume the positions indicated in Figure 5 with the actuation body 32 which, thanks to the aforementioned cam means, raises the slider 34 to its maximum height, which in turn raises the external extra weight 74 which engages with its upper edge 82 the fins 96, raising the protective casing 92 which draws the shutter 23 and the first extra weight 72 integral therewith, thus forcing the opening of the aperture 44 of the central stem 40 of the valve and connecting the interior of the cooker with the outside and causing the complete release of the steam. This is in fact the working condition known as total release. As shown in Figure 6, in this condition the block 37 for actuating the part 15 for engaging and locking the handles together is in the position indicated by an unbroken line and denoted by the reference S and does not therefore act on the trigger 118 of the latter and the return spring 116 maintains the tooth 108 inserted in the housing 110 of the handle 18 of the cooker. In this condition too it is not possible to open the pressure cooker.

Now, if due to any malfunctioning of the valve or because the user has opened the cooker too soon and the pressure inside the cooker does not reach a safety level, for example of 0.04 bar, as shown in Figure 1 the pin 28 remains raised and, due to the engaging against the latter by the finger 38 integral with the body 32, means that it is impossible to change from position "S" to position "A" and the cooker cannot be opened. Thus any risk of burning for the user of the cooker is avoided.

In the fourth working condition wherein the lever 30 is arranged, as shown by the dotted line in Figure 8, at the reference "A" on the handle 20 of the lid of the cooker, the various parts of the valve are positioned as in the previous position S and is again documented by Figure 5 with the actuation body 32 which maintains the slider 34 raised, which in turn holds the external extra weight 74 raised and hence raises the protective casing 92 and the shutter 23, leaving the aperture 44 of the central stem 40 open. In this condition, as shown in Figure 7, the block 37, following further rotation of the lever 30, pushes the trigger 118 and makes the engaging and locking part 15 rotate on the pin 114, opposing the return spring 116 and causing the release of the tooth 108 from the housing 110 of the handle 18. In this condition the two handles 18 and 20 are disengaged and are freely rotating one in relation to the other as fully shown by the dotted line position in Figure 2, and it is thus possible to provide for the opening of the cooker.

It is naturally understood that what has been written and shown in reference to the preferred embodiment of the present invention has been given purely by way of a non- limiting example of the principle claimed.

## Claims

1. Pressure cooker of the type comprising a container (10) whereon a lid (12) is mounted for closure of the container (10), the edge of the latter and the edge of the container (10) both having respective jutting projections (14, 16) suitable for engaging reciprocally one with the other and for locking the lid (12) on the container (10) following a relative rotation between the lid (12) and the container (10), and each comprising at least one respective handle (18,20), said handles (18,20) being mobile between a position of opening of the lid (12), wherein they are angularly distanced, and a position of closure, wherein they are one on top of the other; the lid (12) comprising an aperture (22) at which a working valve (24) is attached for releasing the steam produced by cooking, said working valve (24) having a shutter (23) for closing said aperture (22); characterised in that it comprises, at said handle (20) of the lid (12), a control lever (30) which is angularly mobile and selectively positionable in predetermined angular actuation positions, and below said shutter (23) of the valve (24), a cylindrical body (32), having a longitudinal axis, attached to said lid (12) so as to rotate around said longitudinal axis and integral with said lever (30) to rotate with the latter, a raising slider (34) for said shutter (23) of the valve (24), also cylindrical, coaxial and facing said cylindrical body (32), said raising slider (34) being rotatably fixed with respect to said lid (12) so as to be axially mobile in the direction of said longitudinal axis and cam means provided between said slider (34) and said cylindrical body (32) for driving the axial movement of said slider (34) for raising the shutter (23) following a rotation of said control lever (30).

2. Pressure cooker according to claim 1, wherein said handles (18, 20) of the pressure cooker are intended to engage one with the other, by means of a suitable part for engaging and locking rotation (15) and for locking, following a rotation, the lid (12) on the container (10); characterised in that it comprises a block (37) integral with said actuation body (32) for control, following rotation of the lever (30), of said part (15) for engaging and locking together the handles (18,20), such as to engage, and disengage respectively, said handles (18,20) one in respect of the other.

3. Pressure cooker according to claim 1 or 2, wherein the lid (12) of the pressure cooker comprises a passage (26) wherein slides a safety pin for locking opening of the cooker (28), designed to prevent opening of the lid (12) when the internal pressure is still above a predetermined safety pressure; characterised in that it comprises a finger (38) which projects radially from said cylindrical body (32), said finger (38) interfering during the movement of rotation of said cylindrical body (32) following rotation of the control lever (30) with the axial sliding path of said safety pin (28).

4. Pressure cooker according to any one of the previous claims, characterised in that said shutter (23) of said working valve (24) for the closure of said aperture (22) is integral with a first cylindrical extra weight (72), whereon a second annular extra weight (74) can be rested, coaxial and outside of said first cylindrical extra weight (72) and axially mobile in respect thereof, said second external annular extra weight (74) having a lower engaging surface for said raising slider (34).

5. Pressure cooker according to claim 4, wherein said working valve (24) comprises an external protective casing (92) having slits (94) for the release of the steam whereto the shutter (23) is integral, characterised in that said casing (92) has internally at least one radial projection (96) for engaging and raising by an upper edge (82) of said external annular extra weight (74).

6. Pressure cooker according to claim 4, characterised in that said slider (34) has an upper tapered or pointed edge (58) suitable for engaging in an annular groove (80) provided in the lower engaging surface of said second extra weight (74).

7. Pressure cooker according to claim 1, characterised in that said cam means comprise at least a first, a second and a third pin (53), angularly distanced at 120° one from the other and which extend radially from said cylindrical body (32) and are inserted in corresponding sliding grooves (52), substantially helical, provided on the lateral surface of said slider (34) facing said cylindrical body (32), and vertical ribs (50) for preventing longitudinal sliding and rotation provided on said slider (34), suitable for inserting in corresponding vertical grooves (46) integral with said lid (12).

8. Pressure cooker according to claim 7, characterised in that said substantially helical sliding grooves (52) each have an initial short horizontal section (54), situated at the lower edge of said slider (34), wherefrom an oblique section (56) extends for controlling raising of said slider (34).

9. Pressure cooker according to claim 1, characterised in that it comprises means for stopping rotation of said lever (30) in the predetermined angularworking positions.

10. Pressure cooker according to claim 9, characterised in that said means for stopping rotation of said lever (30) comprise a flexible element (62) having one end (64) integral with said lever (30) and with said cylindrical actuation body (32) and a portion (68) for insertion in vertical grooves (70) angularly distanced one from the other and formed on the external face of said raising slider (34).

11. Pressure cooker according to claim 7, characterised in that at said passage aperture (22), coaxial and concentric with said cylindrical actuation body (32) and said slider (34), a cylindrical stem (40) is provided wherein a central longitudinal hole (44) is formed, open at both ends, said stem (40) being firmly attached to said lid (12), defining a pivoting element for said actuation body (32) and having on its external surface said vertical grooves (46) wherein said vertical ribs (50) of said slider (34) are freely inserted, sliding in an axial direction.

12. Pressure cooker according to claim 2, characterised in that said engaging and locking part (15) is in the form of a shaped plate having an actuation trigger (118) for a tooth (108) for engaging said handle (18) attached to the container (10), said engaging and locking part (15) being pivoted to said handle (20) attached to the upper lid (12) and being subjected to the action of preloaded elastic means (116) for maintaining said part (15) for engaging and locking the handles together in an engaged condition.

13. Pressure cooker according to claim 1, characterised in that said cylindrical actuation body (32) has below an annular support flange (49) for said slider (34) provided with holes (51) for percolation of the condensate and of the residues of the cooking steam released from the working valve (24).

14. Pressure cooker according to claim 5, characterised in that said casing (92) has an external fin (98) which extends radially and engages in a suitable housing (100) provided in the handle (20) for preventing any rotation of said casing (92).

15. Pressure cooker according to claim 1, characterised in that said handle attached to the upper lid (20) has a convex surface wherein a substantially circular hole (102) is formed for housing said working valve (24) having a sort of tooth (100) defining said housing for the external fin (98) of the casing (92) for the passage of said safety pin (28) and an arched slit (106) for the passage of said control lever (30).

16. Pressure cooker according to claim 15, characterised in that said handle (20), at said arched slit (106) for the passage of said control lever (30), has a series of reference indications defining working positions of the system.

17. Pressure cooker according to claim 12, characterised in that said handle attached to the container (18) has a housing (110) for inserting the tooth (108) of said part (15) for locking and engaging the handles (18,20) together.

## Patentansprüche

1. Schnellkochtopf des Typs mit einem Behälter (10), auf dem ein Deckel (12) aufgebaut ist, zum Schließen des Behälters (10), wobei der Rand dieses letzteren und der Rand des Behälters (10) beide entsprechende herausragende Projektionen (14,16) besitzen, geeignet um sich gegenseitig einzurasten und um den Deckel (12) auf dem Behälter (10) durch entsprechendes Drehen zwischen dem Deckel (12) und dem Behälter (10) zu schließen, und jeder davon enthaltend wenigstens einen Handgriff (18,20), wobei diese Handgriffe (18,20) zwischen einer offenen Lage des Deckels (12) beweglich sind, in der sie winkelförmig entfernt sind, und einer geschlossenen Lage, wobei die eine auf der oberen Seite der anderen liegt; wobei der Deckel (12) eine Öffnung (22) aufweist, auf der ein Arbeitsventil (24) aufgebaut ist, um den beim Kochen verursachten Dampf herauszulassen, wobei das genannte Arbeitsventil (24) einen Verschluß (23) besitzt um die genannte Öffnung (22) zu schließen, charakterisiert in dem was enthalten ist, am Handgriff (20) des Deckels (12), einen Kontrollhebel (30), der winkelförmig beweglich ist und wahlweise einstellbar auf vorher bestimmten winkelförmigen Einstellagen, und unter dem genannten Verschluß (23) des Ventils (24), einen walzenförmiger Körper (32), mit einer Längsachse, angebaut an dem genannten Deckel (12), so daß er rund um die genannte Längsachse drehen kann und einheitlich mit dem genannten Hebel (30) mit dem letzteren drehen kann, ein Aufwärtsschieber (34) für den genannten Verschluß des Ventils (24), auch walzenförmig, koaxial und gegenüber diesem walzenförmigen Körper (32), wobei der Aufwärtsschieber (34) zu dem genannten Deckel (12) drehbar aufgebaut ist, so daß eine axiale Beweglichkeit gewährleistet werden kann, in Richtung der Längsachse und Nocken zwischen dem genannten Schieber (34) und dem walzenförmigen Körper (32) zum Steuern der axialen Bewegung des genannten Schiebers (34), um den Verschluß (23) nach einer Umdrehung des genannten Kontrollhebel (30) zu heben.

2. Schnellkochtopf gemäß Anspruch 1, wobei die genannten Handgriffe (18,20) des Schnellkochtopfes die Aufgabe haben, sich ineinander einzurasten, mit Hilfe eines geeigneten Teils zum Einrasten und Befestigen der Drehung (15) und zum Verschluß des Deckels (12) auf dem Behälter (10) nach einer Drehung, in dem charakterisiert, daß ein Block (37) einheitlich mit dem Betätigungskörper (32) zur Überwachung enthalten ist, nach Drehen des Hebels (30), des genannten Teils (15) um die beiden Handgriffen (18,20) einzurasten und zu schließen, sowie die genannten Handgriffe entsprechend wieder gegenseitig auszuschalten und zu öffnen.

3. Schnellkochtopf gemäß Anspruch 1 bzw.2, wobei der Deckel (12) des Schnellkochtopfes einen Durchgang (26) aufweist, in dem sich eine Sicherheitsnadel schieben läßt um den Verschluß des Kochers (28) zu öffnen, entwickelt um das Öffnen des Deckels (12) zu verhindern, wenn der Innendruck einen voreingestellten Sicherheitsdruck überschreitet; charakterisiert indem ein Finger (38) enthalten ist der radial von dem walzenförmigen Körper (32) vorspringt, wobei der genannte Finger (38) während der Drehbewegung des genannten walzenförmigen Körpers (32) nach dem Drehen des Kontrollhebels (30) mit dem axialen Schiebeweg dieser Sicherheitsnadel (28) sich einschaltet.

4. Schnellkochtopf gemäß einer der vorgenannten Ansprüchen, charakterisiert durch das, daß der genannte Verschluß (23) des genannten Arbeitsventils (24) zum Schließen der genannten Öffnung (22) einheitlich ist mit einem ersten walzenförmigen Extragewicht (72), auf dem ein zweites kreisförmiges Extragewicht (74) angebracht werden kann, koaxial und außerhalb des genannten ersten Extragewichts (72) und dementsprechend axial beweglich, wobei das genannte zweite außenstehendes, kreisförmiges Extragewicht (74) eine niedriger beanspruchte Oberfläche für diesen Aufwärtsschieber (34) besitzt.

5. Schnellkochtopf gemäß Anspruch 4, in der das genannte Arbeitsventil (24) ein äußeres Schutzgehäuse (92) enthält, das Schlitze (94) enthält um den Dampf herauszulassen wo der Verschluß (23) einheitlich ist, in dem charakterisiert, daß das genannten Gehäuse (92) in der Innenseite wenigstens eine radiale Projektion (96) aufweist, um einzurasten und zu erhöhen durch einen oberen Rand (82) dieses äußeren kreisförmigen Extragewichts (74).

6. Schnellkochtopf gemäß Anspruch 4, in dem charakterisiert, daß der genannte Schieber (34) einen oberen eingezogenen bzw. Zugespitzten Rand (58) aufweist, angebracht um in eine kreisförmige Rille (80) einzurasten, beschaffen in der weiter unten einrastenden Fläche des zweiten Extragewichts (74).

7. Schnellkochtopf gemäß Anspruch 1, in dem charakterisiert, daß die genannten Nocken wenigstens einen ersten, einen zweiten und einen dritten Stift (53) enthalten, zu 120° winkelförmig entfernt, die eine von der anderen und die sich radial vom genannten walzenförmigen Körper (32) ausdehnen und in entsprechenden Schieberillen (52) eingeschoben sind, substanziell schraubenförmig, angebracht an der seitlichen Fläche des genannten Schiebers (34) gegenüber dem walzenförmigen Körper (32), und senkrechte Rippen (50), um das längliche Schieben und Drehen zu verhindern, die bei diesem Schieber (34) vorkommen, geeignet, um in den entsprechenden senkrechten Rillen (46) einheitlich mit dem genannten Deckel (12) eingefügt zu werden.

8. Schnellkochtopf gemäß Anspruch 7, in dem charakterisiert, daß die genannten schraubenförmige Schieberillen (52) alle eine anfängliche, kurze, horizontale Sektion (54) aufweisen, am unteren Rand des genannten Schiebers (34) positioniert, von dem sich eine schräge Sektion (56) erweitert, um das Heben des genannten Schiebers (34) zu überwachen.

9. Schnellkochtopf gemäß Anspruch 1, in dem charakterisiert, daß dieser Elemente enthält, um das Drehen des genannten Hebels (30) in den vorher bestimmten Arbeitslagen aufzuhalten.

10. Schnellkochtopf gemäß Anspruch 9, in dem charakterisiert, daß die genannten Elemente, um das Drehen des genannten Hebels aufzuhalten, ein flexibles Element (62) enthält, welches das eine Ende (64) einheitlich mit dem genannten Hebel (30) aufweist und mit dem genannten walzenförmigen Betätigungskörper (32) und einen Teil (68) zum Einfügen in die senkrechten Rillen (70) winkelförmig voneinander entfernt und gestaltet auf der Außenfläche des genannten Aufwärtsschieber (34).

11. Schnellkochtopf gemäß Anspruch 7, in dem charakterisiert, daß an der genannten Durchführungsöffnung (22), koaxial und konzentrisch zu dem genannten walzenförmigen Betätigungskörper (32) und dem genannten Schieber (34) eine walzenförmige Stange (40) angebracht ist, in dem ein mittleres Loch in der Längsrichtung gestaltet ist, an beiden Enden offen, wobei die genannte Stange (40) an dem genannten Deckel (12) fest angebaut ist, wodurch ein schaukelndes Element für den genannten Betätigungskörper (32) gebildet wird, und die an seinen Außenflächen die genannten senkrechten Rillen (46) aufweisen, in denen die genannten senkrechten Rippen (50) des genannten Schiebers (34) frei eingeschoben sind, und wobei sie in eine axiale Richtung geschoben werden.

12. Schnellkochtopf entsprechend der Anspruch 2, in dem charakterisiert, daß das genannte Teil (15) zum Einstellen und Schließen in der Form einer gewalzten Platte gestaltet ist, das einen Betätigungsauslöser (118) aufweist, für einen Zahn (108), um den am Behälter (10) aufgebaute Handgriffe (18) zu betätigen, wobei das genannte Teil (15) zum Einstellen und Befestigen zum Handgriff (20) gelenkig ist, angebaut am oberen Deckel (12) und der Betätigung von elastischen vorbelasteten Nocken (116) unterliegt, um das genannte Teil (15) zum Einstellen und Schließen der Handgriffe zusammen in einer beanspruchten Kondition zu bewahren.

13. Schnellkochtopf entsprechend der Anspruch 1, in dem charakterisiert, daß der genannte walzenförmige Betätigungskörper (32) unten eine kreisförmige Flanschstütze (49) besitzt, für den genannten Schieber (34), ausgestattet mit Löcher (51) für das Filtrieren des Kondensmittels und der Rücklagen des Kochdampfes, der aus dem Arbeitsventil (24) herausströmt.

14. Schnellkochtopf entsprechend der Anspruch 5, in dem charakterisiert, daß das genannte Gehäuse (92) auf der Außenseite einen Flügel (98) aufweist, der sich radial ausdehnt und sich in eine geeignete Hülle (100) einsetzt, im Handgriff (20) untergebracht, um jedes Drehen des genannten Gehäuses (92) zu verhindern.

15. Schnellkochtopf entsprechend der Anspruch 1, in dem charakterisiert, daß der genannte Handgriff angebaut auf dem oberen Deckel (20), eine konvexe Fläche besitzt, in der ein substanziell kreisförmiges Loch (102) gestaltet ist, um das genannte Arbeitsventil (24) einzuräumen, welches eine Art von Zahn (100) aufweist, wobei das genannte Gehäuse für den äußeren Flügel (98) des Gehäuses (92) für den Durchgang des genannten Sicherheitsflügel (28) und einen bogenförmige Rille (106) für den Durchgang des Kontrollhebels (30) besitzt.

16. Schnellkochtopf entsprechend der Anspruch 15, in dem charakterisiert, daß der genannte Handgriff (20), an der bogenförmigen Rille (106) für den Durchgang des genannten Kontrollhebels (30), eine Reihe von Angaben als Anhaltspunkte besitzt, welche die Arbeitslagen der Anlage definiert.

17. Schnellkochtopf entsprechend der Anspruch 12, in dem charakterisiert, daß der auf dem Behälter (18) angebaute Handgriff ein Gehäuse (110) aufweist, um den Zahn (108) des genannten Teils (15) einzuschieben, um zusammen die Handgriffe (18,20) zu schließen und einzurasten.

## Revendications

1. Autocuiseur du type comprénant un récipient (10), sur lequel est monté un couvercle (12) pour la fermeture du récipient, le bord du couvercle et le bord du récipient (10) tous les deux ayants des ressauts qui se chevauchent (14,16) de façon qu'ils s'engagent réciproquement l'un avec l'autre et bloquent le couvercle (12) sur le récipient (10), à la suite d'une rotation relative entre le couvercle (12) et le récipient (10), tous les deux comprennent au moins une poignée (18,20), les poignées susdites (18,20) étant mobiles entre une position d'ouverture du couvercle (12) , où elles sont espacées en angle , et une position de fermeture, où elles sont placées l'une au dessus de l'autre; le couvercle (12) comprenant une ouverture (22) où est attachée une soupape de surcharge (24) pour la discharge de la vapeur produisée par la cuisson, la soupape susdite (24) ayant un obturateur (23) qui ferme l'ouverture susdite (22); caractérisée par le fait qu'il comprend , à la poignée susdite (20) du couvercle (12), un levier de contrôle (30) qui est mobile en angle et qui peut être positionné sélectivement dans des positions angulaires prédéterminées de commande, au dessous de cet obturateur (23) de la soupape (24) un corps cylindrique (32) , ayant un axe longitudinal , fixé au susdit couvercle (12) de façon qu'il peut tourner autour de cet axe longitudinal et integral avec dit levier (30) pour tourner avec le dernier, un curseur de soulevement (34) pour l'obturateur (23) de la soupape (24), de plus cylindrique, coaxial et situé devant le corps cylindrique (32) , le courseur de soulevement (34) étant fixé pivotant par rapport au couvercle (12) , ainsi qu'il est mobile en sens axial dans la direction de l'axe longitudinal, et moyens de came entre le courseur de soulevement (34) et le corps cylindrique (32) qui permet le mouvement axial du courseur (34) pour soulever l'obturateur (23) à la suite d' une rotation du levier de contrôle (30).

2. L'autocuisuer selon la revendication 1, où les poignées (18,20) de l'autocuiseur sont projetées pour s'engager l'une avec l'autre, au moyen d'une pièce destinée à la rotation (15) pour l'engagement et la fermeture et à la fermeture, suivante une rotation, du couvercle (12) sur le récipient (10); caractérisé par le fait qu'il comprend un bloc intégré avec le corps de contrôle (32), à la suite de la rotation du levier (30), de la pièce (15) pour engager et fermer ensemble les poignées (18,20), de façon d'engager et dégager respectivement , les poignées susdites (18,20) l'une par rapport à l'autre.

3. L'autocuiseur selon la revendication 1 ou 2, où le couvercle (12) de l'autocuiseur comprend un passage (26) où glisse une cheville de sécurité (28) pour la bloquer l'ouverture de l'autocuiseur, projetée pour prévenir l'ouverture du couvercle (12) lorsque la pression intérieure est supérieure à une pression de sécurité prédéterminée; caractérisé par le fait qu'il comprend un cliquet (38) qui sort radiale du corps cylindrique (32), ce cliquet s'interposant pendant le mouvement de rotation du corps cylindrique (32) suivant la rotation du levier de contrôle (30) avec le parcours dé glissement axial de la cheville de sécurité (28) .

4. L'autocuiseur selon n'importe quelle revendication précédente, caractérisé par le fait que l'obturateur (23) de la soupape (24) pour la fermeture de l'ouverture (22) est intégré avec un premier poids extra cylindrique (72), où un deuxième poids extra annulaire peut s'appuyer (74), coaxial et extérieur au premier poids extra cylindrique (72), et mobile axialement par rapport au deuxième poids extra annulaire extérieur (74), ayant une surface inferieure pour l'engagement du courseur de soulevement (34).

5. L'autocuiseur selon la revendication 4, où la soupape (24) comprend une capsule protective extérieure (92) ayante fentes (94) pour l'échappement de la vapeur , à laquelle est rattaché l'obturateur (23),caractérisé par le fait que la capsule susdite (92) a à l'intérieur au moins un ressaut radial (96) pour engager et soulever le poids extra annulaire extérieur (74) par un bord supérieur (82).

6. L'autocuiseur selon la revendication 4, caractérisé par le courseur (34) qui présente un bord supérieur conique ou bien pointu (58) destiné à s'engager dans une gorge annulaire (80), pourvue dans la surface inferieure du dit deuxième poids extra (74).

7. L'autocuiseur selon la revendication 1, caractérisé par ces moyens de came qui comprenent au moins une première, une deuxième et une troisième cheville (53) espacées à 120° l'une de l'autre et qui sortent radiales du corps cylindrique (32) et sont insérées en correspondents gorges de glissenent (52) en substance hélicoidale, pourvues sur la surface laterale du courseur (34) situé devant le corps cylindrique (32), et de bandes verticales (50) pour prévenir les mouvements longitudinals et la rotation prévus sur le courseur (34), aptes à s'insérer dans correspondents gorges verticales (46) intégrals avec le couvercle (12).

8. L'autocuiseur selon la revendication 7, caractérisé par le fait que les gorges de glissement substantiellement hélicoidales (52) ont chacune une petite section horizontale initial (54), située au bord inférieur du courseur (34), d'où s'étend une section oblique (56) pour le contrôle du soulèvement du courseur (34).

9. L'autocuiseur selon la revendication 1, caractérisé par le fait qu'il comprend moyens pour arrêter la rotation du levier (30) dans des positions angulaires prédéterminées.

10. L'autocuiseur selon la revendication 9, caractérisé par le fait que les moyens pour arrêter la rotation du levier (30) comprennent un élément flexible (62) ayant une extrémité (84) intégrée avec le levier susdit (30) et avec le corps cylindrique (32) , et une pièce (68) pour l'insertion dans les gorges verticales (70) espacées en angle l'une de l'autre et situées sur la face extérieure du courseur (34).

11. L'autocuiseur selon la revendication 7, caractérisé par le fait que, à l'ouverture de passage (22), coaxiale et concentrique avec le corps cylindrique (32) et le courseur (34), on a prévu un arbre cylindrique (40) où il y a un trou central longitudinal ( 44) , ouvert aux deux bouts, cet arbre (40) etant fermement fixé au couvercle (12), constituant un élément oscillant pour le corps (32) et ayant sur sa surface extérieure dites gorges verticales (46) où sont librement insérés les bandes verticales (50) du courseur (34), glissentes en direction axiale.

12. L'autocuiseur selon la revendication 2, caractérisé par le fait que dite pièce pour engager et fermer (15) est en forme de tôle profilée, ayante un déclencheur (118) pour un dent (108) à engager la poignée (18) fixée au récipient (10), dite pièce pour engager et fermer (15) etant pivotée à la poignée (20) fixée sur le couvercle (12) et etant sujette à l'action d'un moyen élastique préchargé (116) pour soutenir soutient la pièce susdite (15) pour engager et fermer les poignées ensemble dans une condition de engagement.

13. L'autocuiseur selon la revendication 1, caractérisé par le fait que le corps cylindrique (32) a en bas une bride annulaire (49) pour le courseur (34), pourvue de trous pour la percolation de l'eau de condensation et des résidus de la vapeur de cuisson échappés de la soupape (24).

14. L'autocuiseur selon la revendication 5, caractérisé par le fait que la capsule (92) a une ailette extérieure (98) qui sort radiale et s'engage dans un'enveloppe correspondante (100) dans la poignée (20) pour prévenir la rotation de la capsule (92).

15. L'autocuiseur selon la revendication 1, caractérisé par le fait que la poignée fixée au couvercle (20), a une surface convexe où un trou substantiellement circulaire (102) a été dessiné pour accueillir la soupape (24) ayant un sorte de dent definant dite enveloppe (100) pour l'ailette extérieure (98) de la capsule (92) pour le passage de la cheville de sécureté (28), et une fente arquée (106) puor le passage du levier de contrôle (309).

16. L'autocuiseur selon la revendication 15, caractérisé par la poignée (20), qui, à la fente arquée (106) pour le passage du levier de contrôle (30), a une série d'indications de référence pour définir les positions de travail du systhème.

17. L'autocuiseur selon la revendication 12, caractérisé par la poignée fixée au récipient (18) qui a un'enveloppe (110) pour l'insertion du dent (108) de la pièce (15) pour engager et fermer les poignées (18,20) ensemble.
